# EUROPÄISCHE PATENTSCHRIFT

(11) **EP 0 466 206 B1**
(45) Veröffentlichungstag und Bekanntmachung des Hinweises auf die Patenterteilung: **04.01.1995**
(21) Anmeldenummer: 91115260.1
(22) Anmeldetag: 19.10.1988
(51) Int. Cl.: B27K 3/52, B27K 3/50

(54) **Holzschutzmittel**
Wood protecting agent
Agent protecteur du bois

(30) Priorität: 27.10.1987 DE 3736298
(43) Veröffentlichungstag der Anmeldung: 15.01.1992
(62) Teilanmeldung aus: 88117433.8
(73) Patentinhaber: Dr. Wolman GmbH, D-76545 Sinzheim (DE)
(72) Erfinder: Goettsche, Reimer, Dr., W-7570 Baden-Baden 19 (DE); Borck, Hans-Volker, W-7570 Baden-Baden (DE); Marx, Hans-Norbert, W-7580 Buehl-Vimbuch (DE)
(74) Vertreter: Karau, Wolfgang, Dr.

(56) Entgegenhaltungen:
- EP-A- 0 147 976
- EP-A- 0 189 844
- EP-A- 0 234 462
- DE-A- 3 138 575
- DE-A- 3 507 420
- DE-A- 3 613 254

## Beschreibung

Die vorliegende Erfindung betrifft wasserlösliche Holzschutzmittel für den Schutz von Holz, insbesondere von frischem Holz, z.B. frisch geschnittenem Schnittholz im Sägewerk oder frisch gefälltem Stammholz im Wald.

Es ist bekannt, Dimethylalkylamine, 2-(Methoxycarbonylamino)benzimidazol (BCM) oder N-Tridecyl-2,6-dimethylmorpholin (Tridemorph), z.B. in Form ihrer Salze, für den Holzschutz zu verwenden (EP-147 976, DE-3 138 575.3, DE-3 507 420.5). Es ist weiter bekannt (EP-189 844), Mischungen aus einem Salz Von BCM mit einer Sulfonsäure und einem quaternären Ammoniumsalz zum Schutz von Holz zu verwenden.

Es wurde gefunden, daß Holzschutzmittel, die a) 5 bis 75 Gew.-% eines Dimethylalkylamins, dessen Alkylrest 6 bis 20 C-Atome enthält, b) 2,5 bis 50 Gew.-% einer wasserloslichen Säure und c1) 4 bis 25 Gew.-% BCM oder c2) 4 bis 25 Gew.-% einer wasserunlöslichen Säure und 4 bis 25 Gew.-% 2-(Methoxycarbonylamino)-benzimidazol enthalten, eine sehr gute Wirkung gegen Holzschädlinge, insbesondere Pilze, haben, die besser ist als die Wirkung der bekannten Holzschutzmittel. Die neuen Holzschutzmittel sind wasserlöslich. Sie werden in Form wäßriger Imprägnierlösungen verwendet, die durch Verdünnen mit Wasser aus den Holzschutzmitteln (Konzentraten) hergestellt werden. Die vorliegende Erfindung umfaßt sowohl die Konzentrate als auch die daraus durch Verdünnen mit Wasser erhältlichen verdünnten wäßrigen Lösungen (Imprägnierlösungen). Die neuen Holzschutzmittel eigenen sich zum Schutz von Holz, insbesondere frischem Holz, wie es beispielsweise als frisch geschnittenes Holz im Sägewerk oder als frisch gefälltes Stammholz im Wald anfällt.

Ein Dimethylalkylamin ist ein N,N-Dimethyl-N-alkylamin, dessen Alkylrest 6 bis 20 C-Atome enthält. Bevorzugt werden Dimethylalkylamine mit 12 bis 14 C-Atomen im Alkylrest. Neben den reinen Dimethylalkylaminen können auch Mischungen, z.B. Mischungen aus Dimethyl-C₁₂-alkylamin und Dimethyl-C₁₄-alkylamin (Dimethylalkyl(C₁₂/C₁₄-amin), verwendet werden.

Eine wasserlösliche Säure ist beispielsweise eine wasserlösliche anorganische Säure, z.B. eine Säure des Phosphors, insbesondere Phosphonsäure (H₃PO₃), Phosphinsäure (H₃PO₂), saure Phosphorsäureester (z.B. Phosphorsäure-mono-(oder -di-)alkylester, beispielsweise Phosphorsäuremonobutylester, Phosphorsäure-di-butylester), Phosphonsäure-mono-alkylester oder eine Säure des Schwefels, z.B. eine Sulfonsäure, beispielsweise Benzolmono-(oder -di)-sulfonsäure, Sulfaminsäure, 4-Phenolsulfonsäure. Ferner eine organische C₂-C₄-Carbonsäure, z.B. Monocarbonsäure, beispielsweise Essigsäure, Propionsäure, Methoxyessigsäure, Milchsäure, Glykolsäure oder Polycarbonsäuren, z.B. Fumarsäure, Citronensäure, Maleinsäure.

Eine wasserunlösliche Säure ist z.B. eine aliphatische C₅-C₂₀-Carbonsäure, beispielsweise eine Monocarbonsäure, Hexansäure, Heptansäure, Octansäure, Nonansäure, Decansäure, 2-Ethylpentansäure, 2-Ethylhexansäure, 2-Ethylheptansäure, Isooctansäure, Isononansäure, Versaticsäuren (stark verzweigte Monocarbonsäuren), oder eine Dicarbonsäure, z.B. Decandicarbonsäure.

Die Säuren können auch in Form ihrer Salze, z.B. Dimethylalkylaminsalze verwendet werden. Die BCM enthaltenden Mittel können neben der wasserlöslichen Säure auch noch eine wasserunlösliche Säure enthalten.

Die Holzschutzmittel sind wassermischbar, bilden mit Wasser klare Lösungen und besitzen in der üblichen Anwendungskonzentration (0,5 bis 10,0 Gew.%, berechnet auf das Konzentrat) einen pH-Wert von unter 7,0 bei ausschließlicher Verwendung von Dimethylalkylamin, bei Mischungen von Dimethylalkylamin mit Tridemorph einen pH-Wert von unter 6 und bei Mischungen von Dimethylalkylamin mit BCM einen pH-Wert von unter 3,5. Sie werden hergestellt durch Mischung der einzelnen Komponenten miteinander.

Die Holzschutzmittel (Konzentrate) sind mehr oder weniger viskose Lösungen, deren Viskosität durch Zugabe von polaren Lösungsmitteln herabgesetzt werden kann. Als polare Lösungsmittel können z.B. Dimethylformamid, Diethylformamid, N-Methylpyrrolidon, Dimethylsulfoxid, Glykole, Polyglykole, Glykolether, Glykoletheracetate, Alkohole verwendet werden. In diesen Fällen liegt das BCM-Salz meist in pastöser Form vor.

Die Konzentrate enthalten (Gewichtsprozente)
5,0 bis 75,0 %, insbesondere 30 bis 50 % Dimethylalkylamin (C₆-C₂₀)
0 bis 75,0 %, insbesondere 15 bis 25 % Tridemorph,
4 bis 25,0 %, insbesondere 4 bis 12 % BCM
2,5 bis 50,0 %, insbesondere 10 bis 45 % wasserlösliche Säuren,
0 bis 25,0 %, insbesondere 5 bis 15 % wasserunlösliche Säuren
0 bis 50,0 %, insbesondere 4 bis 30 % Lösungsmittel
wobei die Summe jeweils 100 (Gew.%) ergibt. Das Mischungsverhältnis (Gewichtsteile) von BCM zu Dimethylalkylamin liegt beispielsweise zwischen 1:50 bis 2:1, vorzugsweise 1:20 bis 1:2.

Zusätzlich kann Wasser enthalten sein, das z.B. in der handelsüblichen Form der Säuren enthalten ist.

Zusätzlich können eingesetzt werden: Netzmittel, Korrosionsinhibitoren, Farbstoffe und ggf. Bindemittel.

Um die Wirkungsbreite der Holzschutzmittel zu verbessern, können sie auch zusätzlich stickstoffhaltige organische Fungizide enthalten, z.B. weitere Morpholinderivate, wie z.B. Fenpropemorph, Aldimorph; Guanidinderivate, wie z.B. Dodecylguanidin, Chlorhexadin, Guazatin, z.B. Imidazolderivate, z.B. Imazalil, Dodecylimidazol, Glyodin; Pyrimidinderivate, z.B. Hexatidin, quartäre Ammoniumverbindungen, z.B. N-Dodecylpyridiniumchlorid. Außerdem können andere Fungizide zusätzlich verwendet werden, wie z.B. 2-(Thiocyanomethylthio)benzothiazol, 3-Jodo-2-propynylbutylcarbanat, 2-(4-Thiazolyl)benzimidazol, wasserlösliche Salze (z.B. das Kaliumsalz) des N-Cyclohexyldiazeniumdioxids.

Auch andere Fungizide, wie z.B. Furmecyclox oder Benodanil, oder Insektizide, wie Lindan oder Permethrin, können den Formulierungen zugegeben werden, sie sind ggf. unter Zusatz von Emulgatoren, z.B. ethoxilierte Nonylphenole, einzuarbeiten.

Die Anwendung zum Schutz des Holzes kann z.B. je nach Gefährdung des Holzes erfolgen:
a) durch Besprühen des Holzes mit der Lösung
b) durch Tauchen des Holzes in die Lösung
c) durch Tränkung des Holzes mit Hilfe von Druckunterschieden, z.B. Kesseldruck- oder Doppelvakuumtränkung
d) durch Streichen des Holzes.

Bei Holzfolgeprodukten, z.B. Holzschnitt, Zellstoff, sowie weiteren technischen Produkten oder auch Cellulose enthaltenden Materialien, die einem Pilzbefall zugänglich sind, z.B. Zwischenprodukte bei der Papierherstellung, verholzten Einjahrespflanzen (Bagasse, Raps) ist die Applikation den technischen Möglichkeiten anzupassen.

Die Wirksamkeit der Mittel im Bereich des Holzschutzes erstreckt sich beispielsweise auf:
a) Schimmelpilze (z.B. Aspergillus niger)
b) Moderfäulepilze (z.B. Chaetomium globosum)
c) Bläuepilze (z.B. Pullularia pullulans)
d) holzzerstörende Basidiomyceten (z.B. Serpula lacrymans),
   insbesondere die Wirkung gegen Bläuepilze ist sehr gut.

Die Holzschutzmittel haben eine sehr gute fungizide Wirkung, wie aus den folgenden Versuchen hervorgeht.

Für die Versuche wurden saftfrische, Sägerauhe Kiefernsplinthölzer mit den Abmessungen von 200 x 50 x 15 mm verwendet, die bis zum Versuchsbeginn tiefgefroren waren.

Nach dem Auftauen (ca. 6 Stunden) wurden die Hölzer in die anzuwendenden Lösungen ca. 10 sec getaucht, zum Abtropfen leicht schräg gestellt und nach einer Zwischenlagrung von ca. 24 Stunden unter normalen Klimabedingungen auf dem Testgelände eingebaut. Mit den einzelnen Testlösungen wurden jeweils zehn Musterbretter in der oben beschriebenen Weise imprägniert. Kontrollhölzer ohne Imprägnierung wurden in reines Wasser getaucht.

Als Testgelände wurde eine schattige Wiese ausgewählt, deren Rasen vor dem Auslegen der Testhölzer kurzgeschnitten wurde. Die Testhölzer wurden auf zwei Kunststoffschienen in einer Höhe von ca. 1 cm über dem Rasen ausgelegt.

Die der äußeren Bewitterung (Regen) ausgesetzten Testbretter wurden nach zwei Monaten (August/September) geprüft.

Die fungizide Wirksamkeit wurde aufgrund der aufgetretenen Verfärbung und Veränderungen der Holzoberfläche nach vier Kategorien klassifiziert:
0 kein Bewuchs
+ leichter punktueller oberflächlicher Bewuchs
++ stärkerer punktueller Bewuchs
+++ großflächig bis vollflächig bewachsen.

### Vergleichsbeispiel

50,00 % Dimethylalkylamin (C₁₂/C₁₄)
17,50 % Phosphonsäure
22,50 % Propylenglykol

| Anwendungskonzentration | Beschaffenheit der 10 Testhölzer |
|---|---|
| 2,5 % | +++ |
| 5,0 % | +++ |

### Vergleichsbeispiel

50,00 % Tridemorph
30,00 % Phosphonsäure
20,00 % Propylenglykol

| Anwendungskonzentration | Beschaffenheit der 10 Testhölzer |
|---|---|
| 2,5 % | +++ |
| 5,0 % | +++ |

### Vergleich

25,00 % 2-(Methoxycarbonylamino)-benzimidazol
37,50 % Phosphonsäure
37,50 % Wasser

| Anwendungskonzentration | Beschaffenheit der 10 Testhölzer |
|---|---|
| 0,25 % | +++ |
| 0,50 % | +++ |
| 1,00 % | +++ |
| 1,50 % | +++ |

### Beispiel 1

30,00 % Dimethylalkylamin (C₁₂/C₁₄)
20,00 % Tridemorph
10,00 % 2-Ethylhexansäure
30,00 % Phosphonsäure
5,00 % N-Methylpyrrolidon
5,00 % 2-(Methoxycarbonylamino)-benzmidazol

| Brett-Nr. | Beschaffenheit der 10 Testhölzer Anwendungskonzentration | | |
|---|---|---|---|
| | 2,0 % | 3,0 % | 4,0 % |
| 1 | 0 | + | 0 |
| 2 | ++ | 0 | + |
| 3 | 0 | + | 0 |
| 4 | 0 | + | 0 |
| 5 | 0 | 0 | 0 |
| 6 | 0 | 0 | 0 |
| 7 | 0 | 0 | 0 |
| 8 | 0 | 0 | + |
| 9 | + | 0 | 0 |
| 10 | 0 | 0 | 0 |

### Vergleichsbeispiel BCM

50 % 2-(Methoxy-carbonylamino)-benzimidazol
50 % Sulfaminsäure
(umgesetzt im Vakuumkneter)

| Anwendungskonzentration | Beschaffenheit der zehn Testhölzer nach Bewitterung |
|---|---|
| 0,25 % | +++ |
| 0,50 % | +++ |
| 1,00 % | +++ |

### Beispiel 2

47,5 % Dimethylalkylamin (C₁₂/C₁₄)
10,0 % 2-Ethylhexansäure
30,0 % Phosphonsäure
7,5 % N-Methylpyrrolidon
5,0 % BCM

| Brett-Nr. | Beschaffenheit der Testhölzer Anwendungskonzentration | | |
|---|---|---|---|
| | 2,5 % | 3,5 % | 5,0 % |
| 1 | + | + | + |
| 2 | + | + | 0 |
| 3 | ++ | + | + |
| 4 | 0 | ++ | 0 |
| 5 | 0 | 0 | + |
| 6 | ++ | + | 0 |
| 7 | 0 | + | + |
| 8 | + | + | 0 |
| 9 | ++ | + | 0 |
| 10 | 0 | + | + |

### Beispiel 6

40,0 % Dimethylalkylamin (C₁₂/C₁₄)
40,0 % Phosphonsäure
10,0 % N-Methylpyrrolidon
10,0 % BCM

| Brett-Nr. | Beschaffenheit der Testhölzer Anwendungskonzentration | | |
|---|---|---|---|
| | 1,5 % | 2,0 % | 3,0 % |
| 1 | + | + | + |
| 2 | ++ | + | + |
| 3 | + | + | 0 |
| 4 | ++ | 0 | + |
| 5 | + | ++ | 0 |
| 6 | + | + | + |
| 7 | + | 0 | + |
| 8 | + | ++ | + |
| 9 | + | + | 0 |
| 10 | ++ | + | + |

Alle Testhölzer ohne Behandlung waren durch Bläuepilze bewachsen und verfärbt (+++).

## Patentansprüche

1. Holzschutzmittel auf der Grundlage eines Dimethylalkylamins und einer Säure, dadurch gekennzeichnet, daß das Holzschutzmittel a) 5 bis 75 Gew.-% eines Dimethylalkylamins, dessen Alkylrest 6 bis 20 C-Atome enthält, b) 2,5 bis 50 Gew.-% einer wasserlöslichen Säure und c1) 4 bis 25 Gew.-% (Methoxycarbonylamino)-benzimidazol oder c2) 5 bis 25 Gew.-% einer wasserunlöslichen Säure und 4 bis 25 Gew.-% 2-(Methoxycarbonylamino)-benzimidazol enthält.

2. Holzschutzmittel nach Anspruch 1, dadurch gekennzeichnet, daß es zusätzlich N-Tridecyl-2,6-dimethylmorpholin enthält.

3. Holzschutzmittel nach Anspruch 1, dadurch gekennzeichnet, daß es Phosphonsäure als wasserlösliche Säure enthält.

4. Holzschutzmittel nach Anspruch 1, dadurch gekennzeichnet, daß es 2-Ethyl-hexansäure als wasserunlösliche Säure enthält.

5. Verfahren zum Schutz von Holz, dadurch gekennzeichnet, daß man das Holz mit einem Holzschutzmittel gemäß Anspruch 1 behandelt.

6. Verfahren zur Herstellung eines Holzschutzmittels, dadurch gekennzeichnet, daß man a) 5 bis 75 Gew.-% eines Dimethylalkylamins, dessen Alkylrest 6 bis 20 C-Atome enthält, b) 2,5 bis 50 Gew.-% einer wasserlöslichen Säure und c1) 4 bis 25 Gew.-% 2-(Methoxycarbonylamino)-benzimidazol oder c2) 5 bis 25 Gew.-% einer wasserunlöslichen Säure und 4 bis 25 Gew.-% 2-(Methoxycarbonylamino)-benzimidazol miteinander mischt.

## Claims

1. A wood preservative based on a dimethylalkylamine and an acid, which contains a) from 5 to 75% by weight of a dimethylalkylamine whose alkyl radical is of 6 to 20 carbon atoms, b) from 2.5 to 50% by weight of a water-soluble acid and c1) from 4 to 25% by weight of 2-(methoxycarbonylamino)benzimidazole or c2) from 5 to 25% by weight of a water-insoluble acid and from 4 to 25% by weight of 2-(methoxycarbonylamino)benzimidazole.

2. A wood preservative as claimed in claim 1, which additionally contains N-tridecyl-2,6-dimethylmorpholine.

3. A wood preservative as claimed in claim 1, which contains phosphonic acid as the water-soluble acid.

4. A wood preservative as claimed in claim 1, which contains 2-ethylhexanoic acid as the water-insoluble acid.

5. A method for preserving wood, wherein the wood is treated with a wood preservative as claimed in claim 1.

6. A process for the preparation of a wood preservative, wherein a) from 5 to 75% by weight of a dimethylalkylamine whose alkyl radical is from 6 to 20 carbon atoms, b) from 2.5 to 50% by weight of a water-soluble acid and c1) from 4 to 25% by weight of 2-(methoxycarbonylamino)benzimidazole or c2) from 5 to 25% by weight of a water-insoluble acid and from 4 to 25% by weight of 2-(methoxycarbonylamino)benzimidazole are mixed with one another.

## Revendications

1. Moyen de protection du bois à base d'une diméthylalkylamine et d'un acide, caractérisé par le fait que le moyen de protection du bois contient (a) 5 à 75 % en poids d'une diméthylalkylamine, dont le reste alkyle contient 6 à 20 atomes C, (b) 2,5 à 50 % en poids d'un acide soluble dans l'eau et c1) 4 à 25 % en poids de (méthoxycarbonylamino)-benzimidazole ou (c2) 5 à 25 % en poids d'un acide insoluble dans l'eau et 4 à 25 % en poids de 2-(méthoxycarbonyl-amino)-benzimidazole.

2. Moyen de protection du bois selon la revendication 1, caractérisé par le fait qu'il contient additionnellement de la N-tridécyl-2,6-diméthylmorpholine.

3. Moyen de protection du bois selon la revendication 2, caractérisé par le fait qu'il contient, comme acide soluble dans l'eau, de l'acide phosphonique.

4. Moyen de protection du bois selon la revendication 1, caractérisé par le fait qu'il contient, comme acide insoluble dans l'eau, de l'acide 2-éthyl-hexanique.

5. Procédé de protection du bois, caractérisé par le fait que l'on traite le bois avec un moyen de protection du bois selon la revendication 1.

6. Procédé de préparation d'un moyen de protection du bois, caractérisé par le fait que l'on mélange entre eux (a) 5 à 75 % en poids d'une diméthylalkylamine, dont le reste alkyle contient 6 à 20 atomes C, (b) 2,5 à 50 % en poids d'un acide soluble dans l'eau et (c1) 4 à 25 % en poids de (méthoxycarbonylamino)-benzimidazole ou (c2) 5 à 25 % en poids d'un acide insoluble dans l'eau et 4 à 25 % en poids de 2-(méthoxycarbonyl-amino)-benzimidazole.
